# EUROPÄISCHE PATENTSCHRIFT

(11) **EP 4 259 458 B1**
(45) Veröffentlichungstag und Bekanntmachung des Hinweises auf die Patenterteilung: **27.11.2024**
(21) Anmeldenummer: 21827595.6
(22) Anmeldetag: 09.12.2021
(51) Int. Cl.: B60C 11/03, B60C 11/12, B60C 11/13

(54) **FAHRZEUGLUFTREIFEN MIT MITTIGER UMFANGSRIPPE**
PNEUMATIQUE TIRE HAVING A CENTRAL CIRCUMFERENTAL RIB PORTION
PNEUMATIQUE AVEC PARTIE DE NERVURE CIRCONFÉRENTALE CENTRALE

(30) Priorität: 14.12.2020 DE 102020215799
(43) Veröffentlichungstag der Anmeldung: 18.10.2023
(73) Patentinhaber: Continental Reifen Deutschland GmbH, 30175 Hannover (DE)
(72) Erfinder: BRANDAU, Christian, 30165 Hannover (DE); BROCKMANN, Jürgen, 30165 Hannover (DE); SENG, Matthias, 30165 Hannover (DE); SUBRAMANIAN, Manickaraj, 30165 Hannover (DE)
(74) Vertreter: Continental Corporation
(86) Internationale Anmeldenummer: PCT/DE2021/200254
(87) Internationale Veröffentlichungsnummer: WO 2022/128021

(56) Entgegenhaltungen:
- EP-A1- 1 961 586
- EP-A1- 2 130 691
- EP-A1- 2 287 016
- DE-T5- 112014 000 628

## Beschreibung

Die Erfindung betrifft einen Fahrzeugluftreifen mit einem ein Profil aufweisenden Laufstreifen. Das Profil des Laufstreifens weist zwei um den gesamten Reifen umlaufende Umfangsrillen auf. Durch zwei zueinander parallellaufende Seiten von diesen zwei Umfangsrillen, die senkrecht zur Achsrichtung A des Fahrzeugluftreifens verlaufen, wird eine mittige Umfangsrippe des Profils begrenzt. Diese Umfangsrippe weist in einem regelmäßigen Abstand in Umfangsrichtung Feinschnitte aufweist, die von einer zur anderen der zueinander parallellaufenden Seiten der zwei Umfangsrillen entlang einer Konturlinie verlaufen.

### Stand der Technik

Auch für den Einsatz im Winter geeignete Fahrzeugluftreifen, meist kurz Winterreifen genannt, müssen ein Fahrzeug auch dann stabil auf einer Fahrbahn halten, wenn diese verschneit oder vereist ist. Außerdem gehört zu dieser Winterperformance, die die Schnee- und Eisperformance umfasst, auch eine sichere Kurvenfahrt mit dem Fahrzeug, sowie ein sicheres Anfahren und Bremsen mit dem Fahrzeug.

Um diese Eigenschaften zu erreichen, weist der Laufstreifen des Fahrzeugluftreifens ein entsprechend gestaltetes Profil auf.

Zur Schneeperformance des Reifens tragen hauptsächlich drei Wirkmechanismen bei, die Gummi-Schneereibung, die Schnee-Schneereibung und die Kanten(scher)wirkung der Profilstruktur.

Die Gummi-Schneereibung eines Fahrzeugluftreifens wird dabei bestimmt durch das Gummimaterial des Laufstreifens, insbesondere durch das Gummimaterial an der Oberfläche des Laufstreifens.

Um die Schnee-Schneereibung zu erhöhen weist das Profil des Laufstreifens des Fahrzeugluftreifens Strukturen wie z.B. Nuten auf, die sich mit von der Fahrbahn aufgenommenem Schnee füllen. Bekannt ist hier aus der WO 2018/103924 A1, das Umfangsnuten sich mit einer Tiefe von 1,5 mm bis 2,5 mm und einer 2,0- bis 3,0-fachen Breite dieser Tiefe sich schnell und zuverlässig beim Fahren auf einer schneebedeckten Fahrbahn mit Schnee füllen. Ein schnelles Füllen einer Struktur im Profil des Fahrzeugluftreifens mit Schnee zur Erzeugung der Schnee-Schneereibung ist besonders wichtig, wenn ein Fahrzeug eine Anti-Schlupf-Regelung (ASR-System) oder ein AntiBlockiersystem (ABS) aufweist, da dann nach kurzen Schlupfwegen bzw. kurzen Eingriffszeiten das Profil des Fahrzeugluftreifens mit der Fahrbahn in Eingriff kommt und hierzu dann die Schnee-Schneereibung benötigt wird.

Die Kanten(scher)wirkung der Profilstruktur wird mit Feineinschnitten, auch als Lamellen bezeichnet, in regelmäßigen Abständen im Profil erreicht. Die Breite dieser Feineinschnitte ist geringer als die Breite von Rillen bzw. Nuten im Profil des Laufstreifens eines Fahrzeugluftreifens und beträgt zwischen 0,2 mm und 0,7 mm, bevorzugt zwischen 0,4 und 0,6 mm und besonders bevorzugt zwischen 0,45 mm und 0,55 mm. Die Feineinschnitte sind typischerweise in den Profilklötzen des Profils des Laufstreifens angeordnet, die durch Rillen im Profil gebildet werden. Durchläuft nun ein Profilklotz die Bodenaufstandsfläche des Fahrzeugluftreifens, d.h. der Profilklotz hat während der Reifenrotation Kontakt mit der Fahrbahn, so öffnen sich die Feineinschnitte im Profilklotz und es entstehen so Griffkanten, die die Kraftübertragung im Schnee erhöhen. Dabei verkippen die durch zwei Feineinschnitte bzw. einen Feineinschnitt und eine Profilklotzkante begrenzten Profilklotzelemente. Die Ausbildung der Griffkanten und der Verkippung der Profilklotzelemente nimmt mit der Tiefe der Feineinschnitte im Profil zu.

Die Tiefe T_{F} der Feineinschnitte kann jedoch an den Klotzrändern reduziert sein, z.B. um das Handling des Fahrzeugluftreifens zu erhöhen. Solche als Randanhebung der Feineinschnitte bezeichneten Strukturen der Feineinschnitte reduzieren anderseits die Ausbildung der Griffkanten und die Verkippung der Profilklotzelemente.

Bei einer vereisten Fahrbahn ist das Verkippen der Profilklotzelements jedoch nachteilig, da sich hierdurch beim Durchlaufen der Bodenaufstandsfläche durch ein Profilklotz die Kontaktfläche zwischen den im Profilklotz vorhandenen Profilklotzelementen mit der vereisten Fahrbahn reduziert, so dass nur eine reduzierte Kontaktfläche zur Kraftübertragung zwischen Fahrzeugluftreifen und Fahrbahn beitragen kann.

Diesem Zielkonflikt der Schnee -und Eisperformance bei Schnee- und Eiseingriff kann durch das Vorsehen von einem Bandprofil in einer Umfangsrippe des Profils des Fahrzeugluftreifenlaufstreifens Rechnung getragen werden. Hierbei läuft die Umfangsrippe einmal um den Reifenumfang und hat dabei eine feste Position in Achsrichtung A des Fahrzeugluftreifens. Die Achsrichtung A des Fahrzeugluftreifens ist dabei die Richtung der Achse, um die der auf eine Felge montierter Fahrzeugluftreifen in einem Fahrzeug rotiert. Entsprechend wird eine solche Umfangsrippe von zwei Umfangsrillen in Achsrichtung A begrenzt. Die Seite dieser Umfangsrillen, die die Umfangrippe begrenzen, laufen vorzugsweise dann zueinander parallel und verlaufen vorzugsweise in Umfangsrichtung senkrecht zur Achsrichtung A. Die die Umfangsrippe begrenzenden Seiten der Umfangsrillen, bzw. der Rand der Umfangsrippe weist dann keine Richtungskomponente in Achsrichtung auf. Dabei weist die Umfangsrippe als Bandprofil in einem regelmäßigen Abstand in Umfangsrichtung einen Feinschnitt auf. Da eine derartige Umfangsrippe keine Profilklötze aufweist, die durch Rillen, insbesondere Querrillen quer zur Umfangsrichtung, getrennt sind, ist ein Verkippen der durch die Feineinschnitte in der Umfangsrippe gebildeten Rippenelemente bei ihrem Durchlauf durch die Bodenaufstandsfläche reduziert. Anderseits stützen sich die Rippenelemente dabei sogar so gut ab, dass die Feineinschnitte sich nicht mehr so weit öffnen, dass die hierdurch entstehenden Griffkanten ihre volle Wirkung bei Schnee entwickeln. Auch die Schnee-Schneereibung ist bei einer derartigen Umfangsrippe nur gering ausgeprägt und beruht nur auf den sie begrenzenden Umfangsrillen mit voller Profiltiefe.

Die Umfangsrippe ist in Achsrichtung A mittig und bevorzugt zentral positioniert. Eine Umfangsrippe ist dabei dann mittig, wenn es in Achsrichtung A zwischen der Umfangsrippe und der näher zu ihr liegenden Reifenschulter weitere Profilelemente wie z.B. Profilblöcke gibt. Eine Umfangsrippe ist eine zentrale Umfangsrippe, wenn sie zentral in Achsrichtung A im Laufstreifen des Fahrzeugluftreifens positioniert ist und damit die sie begrenzenden Seiten der zwei Umfangsrillen den gleichen Abstand zu der in Achsrichtung A näheren Reifenschulter aufweisen.

Wenn in derartigen Umfangsrippen die Feineinschnitte des Bandprofils Randanhebungen am Rand der Umfangsrippe aufweisen, die in Umfangsrichtung hintereinander folgen, so führt dies zu einer erhöhten Umfangssteifigkeit der Umfangsrippe an ihren Rändern, die den Abrieb in diesem Bereich der Umfangsrippe erhöht.

Aus der EP 3 444 129 A1 sind mittige Umfangsrippen mit einer verbesserten Schnee-Schneereibung bekannt mit einem Bandprofil, beim dem sich gegenüber der Achsrichtung A angewinkelte gerade Feineinschnitte und Rillen in Umfangsrichtung abwechseln und die Rillen an ihren Enden zusätzlich eine Phase aufweisen.

Aus der US 2020/0031171 A1 ist eine zentrale Umfangsrippe bekannt, die in regelmäßigem Abstand in Umfangsrichtung einen gegenüber der Achsrichtung A angewinkelte gerade Feinschnitt aufweist, und wobei anstelle eines Feineinschnitts in der achtfachen Länge des Abstands der Feinschnitte in Umfangsrichtung eine dünne genauso gegenüber der Achsrichtung A angewinkelte Querrille in der zentralen Umfangsrippe angeordnet ist. Diese Querrillen weisen in ihren Endbereichen eine Vertiefung auf, die größer ist als die Tiefe der Querrille und die gleiche Tiefe aufweist wie die Umfangsrillen, die die Umfangsrippe begrenzen. Die Seiten dieser Umfangsrillen, die die Umfangsrippe begrenzen weisen eine Zick-zack-Form bezüglich der Achsrichtung A auf und laufen nicht parallel zueinander.

Aus der US 2018/0345734 A1 sind mittige Umfangsrippen eines Fahrzeugluftreifens mit guter Schnee- und Eisperformance bekannt, die in regelmäßigem Abstand in Umfangsrichtung einen gegenüber der Achsrichtung A angewinkelten geraden Feinschnitt aufweisen, und wobei anstelle eines Feineinschnitts in der fünffachen Länge des Abstands der Feinschnitte in Umfangsrichtung eine dünne genauso gegenüber der Achsrichtung A angewinkelte Querrille in der mittigen Umfangsrippe angeordnet ist. Diese Querrillen weisen in ihren Endbereichen eine Vertiefung auf, die größer ist als die Tiefe der Querrille in der Mitte der Umfangsrippe.

Aus der EP 3 421 263 B1 sind mittige Umfangsrippen eines Fahrzeugluftreifens mit guter Schneeperformance bekannt, die in regelmäßigem Abstand in Umfangsrichtung einen gegenüber der Achsrichtung A angewinkelten geraden Feinschnitt aufweisen, wobei bei jedem zweiten Feineinschnitt ein Teil durch eine Querrille ersetzt wird, die tiefer als die Feineinschnitte ist.

Aus der US 2018/0290498 A1 sind Umfangsrippen im Schulterbereich eines Fahrzeugluftreifens bekannt, die in regelmäßigem Abstand in Umfangsrichtung einen Feinschnitt aufweisen, wobei bei jedem fünften Feineinschnitt in Umfangsrichtung die Endbereiche einen Rillenabschnitt aufweisen, der ein größere Breite aufweist als der Feineinschnitt und eine größere Tiefe als der Feineinschnitt. Die Rillenabschnitte sind dazu vorgesehen, sich beim Fahren auf einer schneebedeckten Fahrbahn mit Schnee zu füllen.

Ein weiterer gattungsbildender Fahrzeugluftreifen ist aus der EP 1 961 586 A1 bekannt.

Trotz der schon bekannten Profilstrukturen stellt sich weiterhin die Aufgabe, den Konflikt von Schnee- und Eisperformance noch besser zu lösen unter Berücksichtigung eines reduzierten Reifenverschleißes durch Abrieb.

### Zusammenfassung der Erfindung

Gelöst wird die Aufgabe durch einen Fahrzeugluftreifen gemäß Patentanspruch 1.

Ein derartiger Fahrzeugluftreifen weist einen Laufstreifen mit einem Profil auf, der eine mittige Umfangsrippe aufweist, die durch zwei mindestens nahezu zueinander parallel laufende Seiten von zwei um den gesamten Fahrzeugluftreifen umlaufende Umfangsrillen begrenzt wird, die mindestens nahezu senkrecht zur Achsrichtung A des Fahrzeugluftreifens verlaufen, indem sie lediglich von der radialer Richtung einer senkrechten Ebene zur Achsrichtung A um einen Winkel y, der kleiner als 15 ° ist, so abweichen, dass hierdurch die Breite der Umfangsrippe mit zunehmender Profiltiefe konstant bleibt oder zunimmt, wobei die Umfangsrippe in einen regelmäßigem Abstand d in Umfangsrichtung einen Feinschnitt aufweist, der von einer zur anderen der zueinander parallel laufende Seiten der zwei umlaufenden Umfangsrillen entlang einer Konturlinie verläuft, und wobei anstelle eines Feineinschnitts in der drei- bis siebenfachen Länge des Abstands d der Feinschnitte in Umfangsrichtung jeweils eine dünne Querrille in der mittigen Umfangsrippe angeordnet ist, deren Breite B_{Q} mindestens 2,5 mal so groß ist wie die Breite B_{F} eines Feineinschnitts und die die Konturlinie der Feineinschnitte aufweist, und wobei die Tiefe T_{F} der Feineinschnitte mindestens teilweise über eine Länge L_{red} der Konturlinie in den Endbereichen der Feineinschnitte reduziert ist und über 80 % bis 250 % dieser Länge L_{red} der Konturlinie die dünnen Querrillen in ihren Endbereichen eine Schneetasche aufweisen, die eine Breite B_{S} senkrecht zur Konturlinie aufweist, die mindestens 1,5 mal so groß ist wie die Breite B_{q} der dünnen Querrille, und eine Tiefe T_{S} , die maximal 65 % der Profiltiefe T_{Q} der dünnen Querrille beträgt.

Ein erfindungsgemäßer Fahrzeugluftreifen weist also einen Laufstreifen mit einem Profil auf, dass zwei um den gesamten Reifen umlaufende Umfangsrillen aufweist. Bei den beiden Umfangsrillen handelt es sich um benachbarte Umfangsrillen, zwischen denen sich im Laufstreifen eine mittige Umfangsrippe befindet.

Jede Umfangsrille eines Fahrzeugluftreifens hat nun in Achsrichtung A des Fahrzeugluftreifens zwei Seiten, wenn man ihren Querschnitt senkrecht zur Umfangsrichtung betrachtet. Die beiden Seiten befinden sich bezogen auf den tiefsten Punkt des Querschnitts der Umfangsrille, dessen Abstand zu der Oberfläche des Laufstreifens der Profiltiefe der Fahrzeugluftreifens entspricht, in Achsrichtung A auf der einen oder anderen Seite des tiefsten Punkts des Querschnitts. Beide Seiten der Umfangsrille begrenzen dabei eine Umfangsrippe aus dem Gummimaterial des Laufstreifens. Die aufeinander zugewandten Seiten zweier benachbarter umlaufender Umfangsrillen begrenzen dann gemeinsam eine Umfangsrippe des Profils des Laufstreifens.

Bei einem erfindungsgemäßen Fahrzeugluftreifen laufen die die Umfangsrippe begrenzenden Seiten der beiden Umfangsrillen mindestens nahezu parallel zueinander und mindestens nahezu senkrecht zur Achsrichtung A des Fahrzeugluftreifens. Hierbei weichen die die Umfangsrippe begrenzenden Seiten lediglich von der radialer Richtung einer senkrechten Ebene zur Achsrichtung A um einen Winkel γ ab, der kleiner als 15 ° ist. Diese Abweichung der die Umfangsrippe begrenzenden Seiten ist derart, dass die Breite der Umfangsrippe mit zunehmender Profiltiefe konstant bleibt oder zunimmt. Damit verlaufen beide die Umfangsrippe begrenzenden Seiten parallel zur Umfangsrichtung des Fahrzeugluftreifens und besitzen nur die durch den Winkel γ gegebene geringe Abweichung von der radialen Richtung des Fahrzeugluftreifens. Die radiale Richtung des Fahrzeugluftreifens steht senkrecht auf seiner Achsrichtung A, um die er rotiert. Entlang der radialen Richtung nach innen, d.h. in Richtung auf die Mitte des Fahrzeugluftreifens, nimmt die Profiltiefe des Reifenprofils zu. Die die Umfangsrippe begrenzenden Seiten weichen nun so um den Winkel γ von der radialen Richtung des Fahrzeugluftreifens ab, dass die Breite der Umfangsrippe mit zunehmender Profiltiefe, also nach innen, konstant bleibt oder zunimmt. Entsprechend hat die Umfangsrippe dann über den gesamten Umfang des erfindungsgemäßen Fahrzeugluftreifens an der Oberfläche und bei jeder Profiltiefe eine konstante Breite B in Achsrichtung A, die durch den Abstand der mindestens nahezu parallelen Seiten in Achsrichtung gegeben ist, die aber gemäß dem Winkel y, der mit der Profiltiefe variiert, nach innen zunehmen kann. In einer bevorzugten Ausführungsform liegen die beiden die Umfangrippe begrenzenden Seiten der beiden parallellaufenden Umfangsrillen in zwei parallelen Ebenen , die senkrecht zur Achsrichtung A sind. Dann ist der Winkel γ abgesehen vom Bodenbereich der Umfangsrillen über die Profiltiefe 0 und die Breite B über die Profiltiefe des Profils konstant. In einer besonders bevorzugten Ausführungsform verlaufen auch die beiden Umfangsrillen selber, die die Umfangrippe begrenzen, parallel zueinander in zwei Ebenen senkrecht zur Achsrichtung A, d.h. der tiefsten Punkt des Querschnitts der Umfangsrillen senkrecht zur Umfangsrichtung befindet sich über den gesamten Reifenumfang in jeweils einer der beiden Ebenen senkrecht zur Achsrichtung A. Besonders bevorzugt wiesen dabei beide Umfangsrillen über dem gesamten Reifenumfang die gleiche Breite in Achsrichtung A auf. Reine Fertigungstoleranzen bei der Herstellung des Reifenprofils werden hierbei bzgl. der Ausgestaltung der Umfangsrillen nicht berücksichtigt.

Typischerweise beträgt die Breite B in Achsrichtung Ader Umfangsrippe an ihrer Oberfläche im Neuzustand des Fahrzeugluftreifens 17 mm bis 40 mm, bevorzugt 20 mm bis 30 mm und besonders bevorzugt 22 mm bis 28 mm.

Die Umfangsrippe weist dabei in einen regelmäßigem Abstand d in Umfangsrichtung einen Feinschnitt auf. Dabei verlaufen die in der Umfangsrippe vorhandenen Feineinschnitte von einer zur anderen der zueinander parallellaufenden, die Umfangsrippe begrenzenden Seiten der zwei umlaufenden Umfangsrillen entlang einer Konturlinie. Damit verlaufen die Feineinschnitte von einem Ende der Umfangsrippe in Achsrichtung A, dass durch eine Seite einer der beiden umlaufenden Umfangsrillen gebildet wird zum anderen Ende der Umfangsrippe in Achsrichtung A, dass durch eine Seite der zweiten der beiden umlaufenden Umfangsrillen gebildet wird. Alle Feineinschnitte verlaufen dabei entlang einer festgelegten Konturlinie, die ebenfalls von einem Ende der Umfangsrippe in Achsrichtung A zum anderen Ende der Umfangsrippe in Achsrichtung A verläuft. Die Konturlinie definiert den Verlauf der Feineinschnitte an der Oberfläche des Laufstreifens unabhängig von der Umfangsposition des Feineinschnitts. Dabei handelt es sich bei der Konturlinie lediglich um die Hauptlinie, entlang der die Feineinschnitte von einem Ende der Umfangsrippe zum anderen Ende der Umfangsrippe verlaufen. Der eigentliche Verlauf des Feineinschnitts an der Oberfläche des Laufstreifens kann von dieser Hauptlinie abweichen, da hierbei noch ein Verlauf des Feineinschnitts zur Hauptlinie ergänzt sein kann, der im Wesentlichen in der Oberfläche des Laufstreifens eine Komponente senkrecht zur Hauptlinie aufweist, d.h. der in der Oberfläche des Laufstreifens hauptsächlich senkrecht zur Konturlinie verläuft. Dabei ist die Dimension der Abweichung von der Hauptlinie deutlich kleiner als die Breite B der Umfangsrippe in Achsrichtung A. Typischerweise ist die Dimension der Abweichung maximal 15 % der Breite B der Umfangsrippe, vorzugsweise maximal 5 % der Breite B der Umfangsrippe und besonders bevorzugt 3 % der Breite B der Umfangsrippe. Der derart ergänzte Verlauf hat seine Hauptkomponente, d.h. seine Hauptverlaufsrichtung, in einer Richtung, die typischer nicht mehr als 20 ° von der Senkrechten zur Konturlinie in der Oberfläche des Laufstreifens abweicht, bevorzugt nicht mehr als 5 ° von der Senkrechten zur Konturlinie in der Oberfläche des Laufstreifens abweicht und besonders bevorzugt nicht mehr als 2 ° von der Senkrechten zur Konturlinie in der Oberfläche des Laufstreifens abweicht. Typischerweise oszilliert oder mäandriert der ergänzte Verlauf in der Richtung der Hauptkomponente um die Konturlinie oder weist in dieser Richtung einen Zickzack-Verlauf oder andern periodischen Verlauf auf, wobei die Periode entlang der Konturlinie variieren kann. Der ergänzte Verlauf liegt vorzugsweise nur über einen Teil der Konturlinie vor. Die Feineinschnitte erstrecken sich von der Oberfläche der Umfangsrippe in radialer Richtung des Fahrzeugluftreifens in eine Tiefe T_{F}, wobei sie ihrem Verlauf an der Oberfläche des Laufstreifens folgen. In Umfangsrichtung benachbarte Feineinschnitte weisen dabei in Umfangsrichtung nahezu den gleichen Abstand dₙ auf und laufen dabei bevorzugt parallel zueinander. Der Abstand dₙ benachbarter Feineinschnitte in Umfangsrichtung variiert dabei über den gesamten Reifenumfang typischerweise um maximal 10 % des mittleren Abstands d, vorzugsweise um maximal 5 % des mittleren Abstands d und besonders bevorzugt um maximal 2 % des mittleren Abstands d. Dies beruht insbesondere nur auf Fertigungstoleranzen im Rahmen der Herstellung des Fahrzeugluftreifens. Typischerweise beträgt der regelmäßigem Abstand d in Umfangsrichtung der Feinschnitte an der Oberfläche der Umfangsrippe im Neuzustand des Fahrzeugluftreifens 3 mm bis 9 mm, bevorzugt 4 mm bis 7 mm und besonders bevorzugt 5 mm bis 6 mm.

Anstelle dieser Feineinschnitte ist in der Umfangsrippe der erfindungsgemäßen Fahrzeugluftreifen in der drei- bis siebenfachen Länge des Abstands d der Feinschnitte in Umfangsrichtung jeweils eine dünne Querrille angeordnet. Diese dünnen Querrillen können jeweils im gleichen Abstand oder bevorzugt in unterschiedlichen Abständen in Umfangsrichtung in der Umfangsrille angeordnet sein, wobei der Abstand der dünnen Querrillen im Umfangrichtung jeweils ein Vielfaches des Abstands d der Feineinschnitte in Umfangsrichtung ist. Mit einer Anordnung der dünnen Querrillen mit unterschiedlichen Abständen in Umfangsrichtung wird ein besseres akustisches Verhalten des erfindungsgemäßen Fahrzeugluftreifens erreicht, da hierdurch Schwingungen aufgrund einer bestimmten Resonanzperiode in Umfangsrichtung aufgrund der dünnen Querrippen in der Umfangsrippe vermieden werden.

Die Breite B_{Q} der dünnen Querrille in der mittigen Umfangsrippe des erfindungsgemäßen Fahrzeugluftreifens ist mindestens 2,5 mal so groß ist wie die Breite B_{F} eines Feineinschnitts in der mittigen Umfangsrippe, bevorzugt 2,5 bis 5 mal so groß ist wie die Breite B_{F} eines Feineinschnitts, besonders bevorzugt 2,75 bis 4,5 mal so groß ist wie die Breite B_{F} eines Feineinschnitts und äußerst bevorzugt 2,8 bis 4 mal so groß ist wie die Breite B_{F} eines Feineinschnitts. Die Breite B_{Q} der dünnen Querrillen und die Breite B_{F} der Feineinschnitte ist die Breite senkrecht zu der gemeinsamen Konturlinie der dünnen Querrillen und Feineinschnitte.

Die dünnen Querrillen in der mittigen Umfangsrippe des erfindungsgemäßen Fahrzeugluftreifens weisen nämlich die Konturlinie der Feineinschnitte auf. Hierdurch weisen die Querrillen und Feineinschnitte der mittigen Umfangsrippe im Wesentlichen die gleiche Form an der Oberfläche des Laufstreifens eines erfindungsgemäßen Fahrzeugreifens auf. Damit folgen die dünnen Querrillen der gleichen Konturlinie wie die Feineinschnitte. Hierbei verlaufen die Konturlinie einer dünnen Querrille und eines benachbarten Feineinschnitte um den Abstand d in Umfangsrichtung versetzt parallel zueinander. Wesentlich ist, dass jede dünne Querrille entlang der Konturlinie verläuft und nicht, wie ein Feineinschnitt noch einen ergänzten Verlauf aufweisen kann, der im Wesentlichen eine Komponente senkrecht zur Konturlinie aufweist. Die dünnen Querrillen erstrecken sich von der Oberfläche der Umfangsrippe in radialer Richtung des Fahrzeugluftreifens in eine Tiefe T_{Q}, wobei sie ihrem Verlauf an der Oberfläche des Laufstreifens folgen.

Die Tiefe T_{F} der Feineinschnitte der mittigen Umfangsrippe des erfindungsgemäßen Fahrzeugluftreifens ist mindestens teilweise über eine Länge L_{red} der Konturlinie in den Endbereichen der Feineinschnitte reduziert. Damit ist die Tiefe T_{F} eines derartigen Feineinschnitts in einem Endbereich oder beiden Endbereichen des Feineinschnitts, die benachbart zu den beiden die Umfangsrippe begrenzenden Umfangrillen sind, auf eine reduzierte Tiefe T_{F,1} begrenzt. Ein solcher Feineinschnitt weist dann eine Randanhebung oder zwei Randanhebungen auf. Es können sowohl nur ein Teil der Feineinschnitte der mittigen Umfangrippe eine oder zwei derartige Randanhebungen aufweisen als auch alle Feineinschnitte. Die Reduzierung der Tiefe T_{F} kann bei allen Feineinschnitten mit Randanhebung gleich oder auch unterschiedlich sein. Die Länge L_{red} der Konturlinie, in der eine Randanhebung vorliegt, beginnt jeweils an einem Ende der Oberfläche der Umfangsrippe in Achsrichtung A, also an einer der beiden Seiten einer der beiden Umfangrillen, die die Umfangsrippe begrenzen, und endet dann an einem bestimmten Punkt der Konturlinie.

Über nahezu die gleiche oder eine größere Länge L_{S}, nämlich über 80 % bis 250 % dieser Länge L_{red} der Konturlinie weisen die dünnen Querrillen der Umfangsrippe in ihren Endbereichen eine Schneetasche auf. Damit erstreckt sich eine solche Schneetasche an den Enden der dünnen Querrille über diese Länge L_{S} entlang der Konturlinie ebenfalls beginnend an einer der beiden Seiten einer der beiden Umfangrillen, die die Umfangsrippe begrenzen. Die Aufgabe einer solchen Schneetasche, die eine Kavität im Reifenprofil darstellt, ist es, sich schnell mit Schnee von der Fahrbahn im Fahrbetrieb zu füllen, so dass entsprechend schnell ein erhöhter Schneegriff durch die Schnee-Schnee-Reibung eintritt.

Die Schneetaschen an den Enden der dünnen Querrillen weisen hierbei eine Breite B_{S} senkrecht zur Konturlinie der dünnen Querrillen auf, die parallel zur Reifenoberfläche bestimmt wird, in der die Konturlinie verläuft, die mindestens 1,5 mal so groß ist wie die Breite B_{Q} der dünnen Querrille, und eine Tiefe T_{S} , die maximal 65 % der Profiltiefe T_{Q} der dünnen Querrille beträgt. Damit sind die weiteren geometrischen Dimensionen der in der mittigen Umfangsrippe eines erfindungsgemäßen Fahrzeugluftreifens vorgesehenen Schneetaschen gekoppelt an die Dimensionen der dünnen Querrillen in der Umfangsrippe. Sie sind breiter als die dünnen Querrillen senkrecht zur Konturlinie der dünnen Querrillen, die ja auch die Konturlinie der Feineinschnitte ist, und zwar mindestens 1,5 mal so breit wie die dünnen Querrillen. Ihre Tiefe Ts dagegen ist geringerer als die Profiltiefe T_{Q} der dünnen Querrille, und zwar derart, dass ihre Tiefe T_{S} maximal 65 % der Profiltiefe T_{Q} der dünnen Querrille beträgt. Hierbei gibt die Tiefe T_{S} der Schneetaschen und die Profiltiefe T_{Q} der dünnen Querrillen jeweils die Ausdehnung der Schneetaschen bzw. dünnen Querrillen in radialer Richtung des Fahrzeugluftreifens ausgehend von der Oberfläche des Laufstreifens de Fahrzeugluftreifens an. Hierbei weist die radiale Richtung von der Reifenoberfläche nach innen auf die Drehachse des Fahrzeugluftreifens und steht senkrecht auf dieser. Damit sind in einer mittigen Umfangsrippe eines erfindungsgemäßen Fahrzeugluftreifens an den Enden von dünnen Querrillen, die von einer Seite der Umfangsrippe zur anderen verlaufen, Schneetaschen vorgesehen, die lateral, d.h. parallel zur Reifenoberfläche eine Ausdehnung aufweisen, die gegeben ist durch eine Länge Ls entlang der Konturlinie der zugehörigen dünnen Querrille und eine Breite Bs senkrecht zur der Konturlinie. Die Breite B_{S} ist dabei bewusst gegenüber der Breite B_{Q} der dünnen Querrille erhöht und die Länge L_{S} ist in ähnlicher Dimension oder einem bestimmten Maß größer gewählt wie die Länge L_{red} der Randanhebungen der Feineinschnitte der Umfangsrippe. Insgesamt weisen die Schneetaschen so eine große Querschnittsfläche an der Riefenoberfläche auf, die im Fahrbetrieb bei einer verschneiten Fahrbahn sich mit Schnee füllen kann. Weiter bedingt die begrenzte Tiefe Ts der Schneetaschen ein schnelles Füllen der Schneetasche mit Schnee, so dass schnell erhöhter Schneegriff durch die Schnee-Schnee-Reibung ermöglicht wird. Ein solcher Eingriff ist besonders vorteilhaft, wenn ein Fahrzeug eines Anti-Schlupf-Regelung (ASR) oder ein Antiblocksystem (ABS) aufweist und damit in der Lage ist, die verbesserte Reibung schnell zu nutzen.

Weiter weist Länge Ls der Schneetaschen, die über 80 % bis 250 % der Länge L_{red} der Randanhebungen der Feinschnitte entlang der Konturlinie beträgt, nahezu die gleiche Dimension wie die Länge L_{red} der Randanhebungen auf oder ist größer wie die Länge L_{red} der Randanhebungen. Damit sind die Schneetaschen gezielt in axialer Richtung auch in der gleichen Position wie die Randanhebungen der Feineinschnitte positioniert, da so die Schneetaschen als Kavitäten einer Versteifung der Umfangsrippe in dieser axialen Position, d.h. an ihren Enden in Achsrichtung A, durch die Randanhebungen entgegen wirken und so die Umfangssteifigkeit, also die Elastizität der Umfangsrippe, in axialer Richtung A vergleichmäßigt wird. Dies begünstigt einen gleichmäßigeren Abrieb des Laufstreifens eines erfindungsgemäßen Fahrzeugluftreifens. Diese Vergleichmäßigung basiert auf allen Dimensionen der Schneetaschen, d.h. neben ihrer Länge L_{S} auch ihrer Breite B_{S} und ihrer Tiefe T_{S}.

Durch das beschriebene Vorsehen genau definierter Schneetaschen in der Profilstruktur einer mittigen Umfangsrippe mit gleichmäßigen Feinschnitten, die teilweise durch dünne Querrillen ersetzt werden, kann also sowohl die Schnee-Schnee-Reibung eines Fahrzeugluftreifens verbessert werden als auch gleichzeitig das Abriebverhalten des Fahrzeugluftreifens.

In einer bevorzugten Ausführungsform ist die mittige Umfangsrippe des erfindungsgemäßen Fahrzeugluftreifens seine zentrale Umfangsrippe. In dieser Position hat die Umfangsrippe mindestens zumeist beim Fahrbetrieb den direkten Kontakt mit der Fahrbahn, so dass die Schneetaschen der Umfangsrichtung dann am sichersten bei einer verschneiten Fahrbahn schnell mit Schnee gefüllt werden und sich entsprechend schnell die Schnee-Schnee-Reibung aufbaut.

In einer anderen Ausführungsform sind die dünnen Querrillen anstelle eines Feineinschnitts über verschiedene Vielfache des Abstands d der Feinschnitte in Umfangsrichtung in der mittigen Umfangsrille des erfindungsgemäßen Fahrzeugluftreifens in der Umfangsrichtung angeordnet. Durch dieses Anordnen der dünnen Querrillen in verschiedenen Abständen über den Reifenumfang, wobei trotzdem die Folge der verschiedenen Vielfache sich über den Reifenumfang periodisch wiederholen kann, wird wie bereits zuvor angesprochen, das akustisches Verhalten des erfindungsgemäßen Fahrzeugluftreifens verbessert. Die Folge der Vielfache kann zum Beispiel aus genau zwei verschiedenen Vielfachen, z.B. den Vierfachen und Fünffachen bestehen, die sich unregelmäßig oder regelmäßig wiederholen. In diesem Beispiel wird dann jeder vierter oder fünfte Feineinschnitt durch ein dünne Querrille ersetzt, die an ihren Enden eine Schneetasche mit den zuvor beschriebenen Abmessungen aufweist.

In einer bevorzugten Ausführungsform ist anstelle eines Feineinschnitts in der vier- bis sechsfachen Länge des Abstands d der Feinschnitte in Umfangsrichtung, besonders bevorzugt in der vier- bis fünffachen Länge des Abstands d der Feinschnitte in Umfangsrichtung in der mittigen Umfangsrippe eines erfindungsgemäßen Fahrzeugluftreifens jeweils die zuvor beschriebene dünne Querrille mit ihren Schneetaschen angeordnet. Insbesondere bei diesen Abständen der dünnen Querrillen wird ein Verkippen der Profilklotzelemente in angemessener Form erreicht, um sowohl eine vorteilhafte Schnee- als auch Eisperformance aufgrund der Umfangsrippe zu erreichen.

Bevorzugt ist bei der mittigen Umfangsrippe eines erfindungsgemäßen Fahrzeugluftreifens die Breite B_{Q} der dünnen Querrillen maximal 5 mal so groß ist wie die Breite B_{F} eines Feineinschnitts. Auch dies unterstützt das Verkippen der Profilklotzelemente in angemessener Form und vermeidet ein zu großes Verkippen einzelner Profilklotzelemente.

Bevorzugt sind die Schneetaschen der dünnen Querrillen der mittigen Umfangsrippe eines erfindungsgemäßen Fahrzeugluftreifens symmetrisch zur Konturlinie der dünnen Querrillen angeordnet. Dies trägt zum gleichmäßigen Verkippen der zur dünnen Querrille benachbarten Profilklotzelemente bei.

Bevorzugt weisen die Schneetaschen der dünnen Querrillen der mittigen Umfangsrippe eines erfindungsgemäßen Fahrzeugluftreifens eine Breite B_{S} senkrecht zur Konturlinie aufweisen, die 2 bis 3 mal so groß ist wie die Breite B_{Q} der dünnen Querrille. Besonders bevorzugt ist Breite B_{S} der Schneetaschen 2,2 bis 2,5 mal so groß ist wie die Breite B_{Q} der dünnen Querrille. Dies trägt zu einer guten Schnee-Schneereibung bei gleichzeitiger angemessener Verkippung der Profilklotzelemente und gleichmäßiger Elastizität in Achsrichtung A der mittleren Umfangsrippe bei.

Bevorzugt weisen die Schneetaschen der dünnen Querrillen der mittigen Umfangsrippe eines erfindungsgemäßen Fahrzeugluftreifens eine Tiefe Ts auf, die 35 bis 60 % der Profiltiefe T_{Q} der dünnen Querrille beträgt, besonders bevorzugt 40 % bis 58 % der Profiltiefe T_{Q} der dünnen Querrille beträgt und ganz besonders bevorzugt 50 % bis 55 % der Profiltiefe der dünnen Querrille beträgt. Auch dies trägt zu einer guten Schnee-Schneereibung nach kurzer Zeit bei gleichzeitiger angemessener Verkippung der Profilklotzelemente und gleichmäßiger Elastizität und damit gleichmäßigem Reifenabrieb in Achsrichtung A der mittleren Umfangsrippe bei.

Bevorzugt wiesen die dünnen Querrillen der mittigen Umfangsrippe eines erfindungsgemäßen Fahrzeugluftreifens in ihren Endbereichen über 95 % bis 200 % der Länge L_{red} der Konturlinie, über die die Tiefe T_{F} der Feineinschnitte in den Endbereichen der Feineinschnitte reduziert ist, eine Schneetasche der Länge Ls auf und besonders bevorzugt wiesen diese dünnen Querrillen über 105 % bis 130 % der Länge L_{red} der Konturlinie, über die die Tiefe der Feineinschnitte in den Endbereichen der Feineinschnitte reduziert ist, eine Schneetasche der Länge Ls auf. Insbesondere die Überstimmung zwischen der Position der Anhebungen der Feineinschnitte mit der Position der Schneetaschen trägt dazu bei, dass die Elastizität in Achsrichtung A der mittleren Umfangsrippe in Achsrichtung A recht gleichmäßig ist. Insbesondere auch an den Seiten der Umfangsrippe liegt dann trotz der Anhebungen der Feineinschnitte nahezu die gleiche Umfangssteifigkeit von wie in der Mitte der Umfangsrippe. Hierdurch wird auch der Abrieb des Gummimaterials der Umfangsrippe über die gesamte Breite der Umfangsrippe in Achsrichtung mindestens nahezu gleichmäßig.

Vorzugsweise weisen die dünnen Querrillen der mittigen Umfangsrippe eines erfindungsgemäßen Fahrzeugluftreifens in ihren Endbereichen über eine Länge Ls der Konturlinie von 2,5 mm bis 8 mm eine Schneetasche auf, besonders bevorzugt über eine Länge Ls der Konturlinie von 3,5 mm bis 7 mm und ganz besonders bevorzugt über eine Länge der Konturlinie von 4 mm bis 5,5 mm. Hierbei werden sowohl eine gute Schnee-Schneereibung als auch eine recht gleichmäßige Elastizität in Achsrichtung A der mittleren Umfangsrippe erreicht.

Die Schneetaschen der dünnen Querrillen der mittigen Umfangsrippe eines erfindungsgemäßen Fahrzeugluftreifens weisen einen Bodenbereich und Seitenflächen auf. Der Bodenbereich begrenzt die Schneetaschen in radialer Richtung in einer Tiefe Ts. Hierbei kann die Tiefe T_{S} jedoch in Achsrichtung und Umfangsrichtung um bis 20 % variieren, bevorzugt um bis 5 % und besonders bevorzugt um bis zu 1 %. Die Seitenflächen begrenzen die Schneetaschen durch Flächen, die sich von der Bodenfläche bis zur Oberfläche des Fahrzeugluftreifens erstrecken. Insbesondere kann eine Seitenfläche dabei parallel zur Konturlinie verlaufen oder als Endfläche der Schneetasche senkrecht zur Konturlinie sein. Bevorzugt geht die Fläche des Bodenbereichs der Schneetaschen mit einem Krümmungsradius von 0,2 mm bis 1,5 mm in die Seitenflächen übergeht, besonders bevorzugt mit einem Krümmungsradius von 0,5 mm bis 1,25 mm und ganz besonders bevorzugt mit einem Krümmungsradius von 0,8 mm bis 1,1 mm. Hierdurch wird die schnelle Befüllung der Schneetaschen mit Schnee während des Fahrbetriebs auf Schnee weiter verbessert, was entsprechend schneller zu einer guten Schnee-Schnee-Reibung führt.

In einer Ausführungsform weisen die Schneetaschen der dünnen Querrillen der mittigen Umfangsrippe eines erfindungsgemäßen Fahrzeugluftreifens einen Bodenbereich und eine Endfläche als Seitenfläche auf. Typischerweise geht die Fläche des Bodenbereichs mit einem Krümmungsradius von 0,2 mm bis 1,5 mm in die Endfläche über, bevorzugt mit einem Krümmungsradius von 0,5 mm bis 1,25 mm und besonders bevorzugt mit einem Krümmungsradius von 0,8 mm bis 1,1 mm. Hierdurch wird die schnelle Befüllung der Schneetaschen mit Schnee während des Fahrbetriebs auf Schnee weiter verbessert, was entsprechend schneller zu einer guten Schnee-Schnee-Reibung führt.

Typischerweise weisen die Schneetaschen der dünnen Querrillen der mittigen Umfangsrippe eines erfindungsgemäßen Fahrzeugluftreifens einen Bodenbereich auf, der sich in radialer Richtung nach innen, d.h. in Richtung auf die Mitte des Fahrzeugluftreifens, mit einem Feinschnitt entlang der Konturlinie fortsetzt. Dies fördert die Verkippung der Profilklotzelemente in der Umfangsrippe, insbesondere die Verkippung der zur jeweiligen Querrille benachbarten Profilklotzelemente, die so durch die gegenüber der Profiltiefe T_{Q} der dünnen Querrippen verringerte Tiefe T_{S} der Schneetaschen nicht verringert wird.

Typischerweise weisen hierbei die Feinschnitte im Bodenbereich der Schneetaschen die gleiche Breite B_{F} auf wie die Feineinschnitte der Umfangsrippe, die nicht durch eine dünne Querrille ersetzt wurden. Dies fördert eine über den Umfang gleichmäßige Verkippung der Profilklotzelemente und die Gleichmäßigkeit der Elastizität der Umfangsrippe in Achsrichtung A weiter.

Bevorzugt weisen die Feinschnitte im Bodenbereich der Schneetaschen die gleiche Tiefe T_{F} auf wie die Feineinschnitte der Umfangsrippe, die nicht durch eine dünne Querrille ersetzt wurden, in der Mitte der Umfangsrippe. Auch dies fördert eine über den Umfang gleichmäßige Verkippung der Profilklotzelemente und die Gleichmäßigkeit der Elastizität der Umfangsrippe in Achsrichtung weiter.

In einer Ausführungsform ist die Konturlinie der Feineinschnitte der mittigen Umfangsrippe eines erfindungsgemäßen Fahrzeugluftreifens eine Gerade, die vorzugsweise senkrecht zu den parallellaufenden Seiten der zwei umlaufenden Umfangsrillen ist.

In einer Ausführungsform ist die Konturlinie der Feineinschnitte der mittigen Umfangsrippe eines erfindungsgemäßen Fahrzeugluftreifens in der Mitte der Umfangsrippe leicht angewinkelt. So kann die Konturlinie hierbei durch zwei zueinander angewinkelte Geraden gebildet werden, die miteinander einen Winkel β von 140 ° bis 170 ° einschließen, bevorzugt einen Winkel β von 150 ° bis 165°.

In bestimmten Ausführungsformen eines erfindungsgemäßen Fahrzeugluftreifens weicht die Konturlinie der Feineinschnitte im Endbereich der Feineinschnitte von der Achsrichtung A des Fahrzeugluftreifens um einem Winkel α von weniger als 20°, bevorzugt weniger als 15° und besonders bevorzugt weniger als 8° ab.

In bestimmten Ausführungsformen eines erfindungsgemäßen Fahrzeugluftreifens sind die der Konturlinie entlanglaufenden Feineinschnitte der mittleren Umfangsrippe über einen Teil der Konturlinie wellenförmig ausgeprägt. In diesem Teil der Konturlinie weicht der eigentliche Verlauf des Feineinschnitts von der Hauptlinie der Konturlinie ab. Der Verlauf des Feineinschnitts wird um eine wellenförmige Komponente senkrecht zur Konturlinie ergänzt. Statt der wellenförmigen Komponente kann der Verlauf des Feineinschnitts auch um eine Zick-Zack-Linie und eine andere oszillierende Komponente ergänzt sein.

In bestimmten Ausführungsformen ist die Tiefe T_{F} der Feineinschnitte teilweise jeweils über eine Länge L_{red} der Konturlinie von 7 % bis 35 % in einem Endbereich oder bevorzugt beiden Endbereichen der Feineinschnitte reduziert, bevorzugt über jeweils eine Länge L_{red} der Konturlinie von 12 % bis 30 % und besonders bevorzugt über eine Länge L_{red} der Konturlinie von 16 % bis 23 %. Bevorzugt ist die Tiefe T_{F} aller Feineinschnitte über eine derartige Länge L_{red} der Konturlinie in beiden Endbereichen der Feineinschnitte reduziert.

In bestimmten anderen Ausführungsformen ist die Tiefe T_{F} der Feineinschnitte teilweise jeweils über eine Länge L_{red} der Konturlinie von 1,5 mm bis 9 mm einem Endbereich oder bevorzugt in beiden Endbereichen der Feineinschnitte reduziert, bevorzugt jeweils über eine Länge L_{red} der Konturlinie von 2,5 mm bis 7,5 mm und besonders jeweils über eine Länge L_{red} der Konturlinie von 3,5 mm bis 5,5 mm. Bevorzugt ist die Tiefe T_{F} aller Feineinschnitte über eine derartige Länge L_{red} der Konturlinie in beiden Endbereichen der Feineinschnitte reduziert.

Bei den zuvor genannten Ausführungsformen kann die Tiefe T_{F,1}, T_{F,2} der Feineinschnitte in ihren Endbereichen bei verschiedenen Feineinschnitten unterschiedlich reduziert sein, um die Umfangssteifigkeit im Umfangsrichtung gleichmäßiger auszuführen. Insbesondere kann bei in Umfangsrichtung aufeinander folgenden Feineinschnitten die Tiefe T_{F} der Feineinschnitte in ihren Endbereichen abwechselnd auf eine erste Tiefe T_{F,1}und eine zweite Tiefe T_{F,1}reduziert sein.

Typischerweise ist die Tiefe T_{F} der Feineinschnitte der mittigen Umfangsrippe eines erfindungsgemäßen Fahrzeugluftreifens in den Endbereichen um 25 % bis 85 % reduziert, bevorzugt um 35 % bis 75 % und besonders bevorzugt um 40 % bis 55 %.

Bei Ausführungsformen, bei denen die Tiefe T_{F,1}, T_{F,2} der Feineinschnitte in ihren Endbereichen bei verschiedenen Feineinschnitten unterschiedlich reduziert ist, ist typischerweise die erste Tiefe T_{F,1}um 25 % bis 60 % reduziert und die zweite Tiefe T_{F,2} um 60 % bis 85 % reduziert, bevorzugt die erste Tiefe T_{F,1} um 35 % bis 55 % reduziert und die zweite Tiefe T_{F,2} um 65 % bis 80 % reduziert und besonders bevorzugt die erste Tiefe T_{F,1} um 40 % bis 50 % reduziert und die zweite Tiefe T_{F,2} um 70 % bis 75 % reduziert. Dies fördert die Gleichmäßigkeit der Elastizität der Umfangsrippe in Umfangsrichtung an ihren Seiten.

### Kurzbeschreibung der Zeichnungen

Anhand eines Ausführungsbeispiels soll die Erfindung nun näher erläutert werden. Es zeigen:
- Fig. 1:: Ausschnitt der Oberfläche eines Laufstreifens eines erfindungsgemäßen Fahrzeugluftreifens über die gesamte Breite des Laufstreifens
- Fig. 2:: Ausschnitt der zentrale Umfangsrippe des in Fig. 1 gezeigten erfindungsgemäßen Fahrzeugluftreifens in Umfangsrichtung
- Fig. 3:: 3-dimensionaler Ausschnitt des Profils der zentrale Umfangsrippe des in Fig. 1 gezeigten erfindungsgemäßen Fahrzeugluftreifens

### Ausführliche Beschreibung der Erfindung

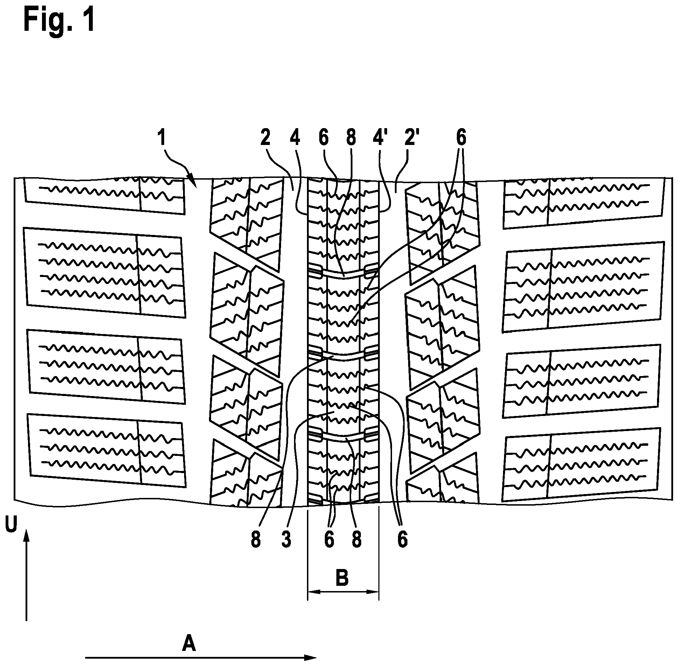

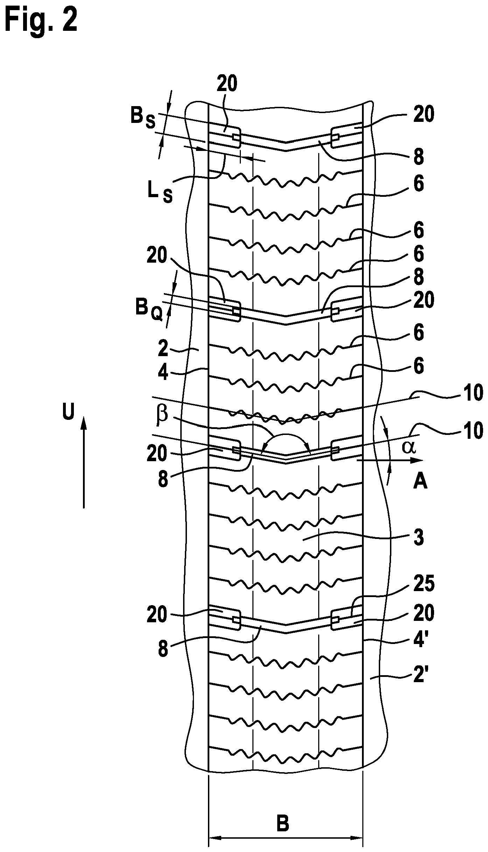

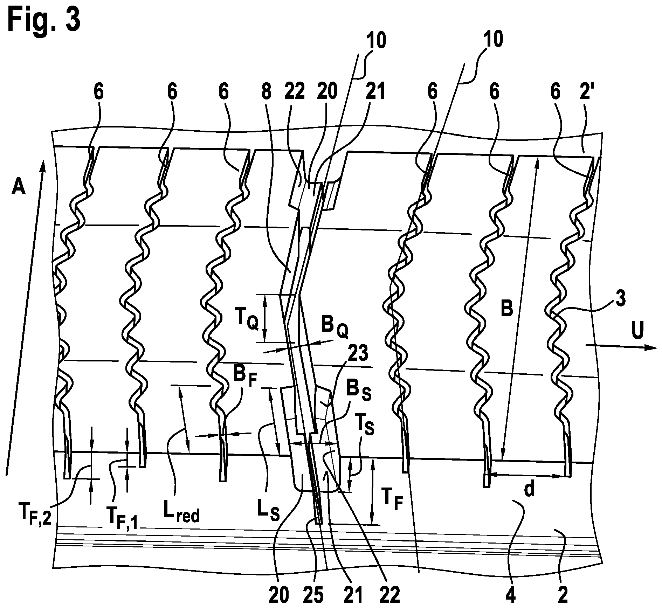

In den Figuren 1 bis 3 wird ein Ausführungsbeispiel eines erfindungsgemäßen Fahrzeugluftreifens gezeigt. Ein solcher Fahrzeugluftreifen weist ein Laufstreifen auf, der mit einem Profil versehen ist. In Figur 1 wird ein Ausschnitt der Oberfläche des Laufstreifens 1 des erfindungsgemäßen Fahrzeugluftreifens in seiner gesamten Breite gezeigt. Man sieht in dem Profil des Laufstreifens 1 verschiedene Profilelemente, mittig in dem Laufstreifen 1 ist eine Umfangsrippe 3 gezeigt, eine zentrale Umfangsrippe. Diese Umfangsrippe 3 erstreckt sich in Umlaufrichtung über den gesamten Umfang des erfindungsgemäßen Fahrzeugluftreifens und wird von zwei über den gesamten Umfang des erfindungsgemäßen Fahrzeugluftreifens umlaufenden Umfangsrillen 2, 2' begrenzt. Die beiden Umfangsrillen 2, 2' laufen parallel zueinander und verlaufen senkrecht zur Achsrichtung A des Fahrzeugluftreifens. Beide Umfangrillen 2, 2' weisen über den gesamten Reifenumfang den gleichen Querschnitt senkrecht zur Umfangsrichtung auf. Beide Umfangsrillen 2, 2' weisen dabei zwei Seiten auf, die die beiden Umfangsrillen 2, 2' in Achsrichtung A begrenzen. Jeweils eine der beiden Seiten 4, 4' der Umfangsrillen 2, 2' begrenzen die Umfangsrippe 3. Ein Ausschnitt der Umfangsrippe 3 in Umfangsrichtung ist ebenfalls in der Figur 2 gezeigt. In dieser Figur sind ebenfalls die die Umfangsrippe 3 begrenzenden Umfangsrillen 2, 2' gezeigt mit ihren Seiten 4, 4', die die Umfangsrippe 3 begrenzen. Ebenfalls in Figur 3 ist die Umfangsrippe 3 gezeigt, diesmal in dreidimensionaler Darstellung, wobei die Umfangsrippe 3 selber wie auch in Figur 2 in einer Ebene abgewickelt ist. Hierbei ist insbesondere der Blick auf die Umfangsrippe 3 in axialer Richtung A gezeigt, wobei ein kurzer Ausschnitt der Umfangsrippe 3 in Umfangsrichtung U gezeigt ist. Auch hier sind die Umfangsrillen 2 und 2' zu sehen, die die Umfangsrippe 3 begrenzen. Lediglich bei der Umfangsrille 2 am unteren Ende der Darstellung ist auch die Seite 4 der Umfangsrille 2 zu erkennen, die den Rand der Umfangsrippe 3 bildet. Die die Umfangsrippe 3 begrenzenden Seiten 4, 4' der Umfangsrillen 2, 2' verlaufen in zwei parallelen Ebenen senkrecht zur Achsrichtung A. Die geraden Seiten 4, 4'sind damit senkrecht zur Laufstreifenoberfläche und erstrecken sich entlang der Umfangsrichtung. Der Abstand der Seiten 4, 4' in Achsrichtung A gibt dann eine in radialer Richtung des Reifens konstante Breite B, der Umfangrippe 3 vor, die in den Ausführungsbeispiel 27 mm beträgt. Die Seiten 4, 4' gehen dann mit einer Krümmung im Bodenbereich der Umfangrillen 2, 2' in den Rillengrund der Umfangrillen 2, 2' über, wie in Figur 3 gezeigt.

Die Umfangsrippe ist durch Feineinschnitte 6 unterteilt, die sich von einer zur anderen der zueinander parallel laufenden Seiten (4, 4') der zwei umlaufenden Umfangsrillen (2, 2') über die gesamte Breite B der Umfangsrippe 3 verlaufen. Die Feineinschnitte 6 haben in Umfangsrichtung U einen regelmäßigen Abstand d zueinander, der bei dem Ausführungsbeispiel an der Oberfläche der Umfangsrippe 3 5,5 mm beträgt. Jeder Feineinschnitt 6 läuft entlang dabei entlang einer Konturlinie 10. Die Form der Konturlinie 10 ist bei allen Feineinschnitten 6 in der Umfangsrippe 3 gleich. Die Konturlinie 10 wird in durch zwei Geraden gebildet, die jeweils gegenüber der Achsrichtung A einen Winkel α von 15° bilden und sich in der Mitte der Umfangsrippe 3 schneiden. Entsprechend schließen die beiden Geraden miteinander einen Winkel β von 150° ein. Abgesehen von den Randbereichen der Umfangsrippe 3 ist dieser Konturlinie 10 beim Verlauf der Feineinschnitte 6 eine wellenförmige Linie überlagert, so dass die Feineinschnitte 6 in der Mitte der Umfangsrippe 3 einen wellenförmigen Verlauf aufweisen. Während die Profiltiefe der Umfangsrillen 2, 2' 8 mm im Neuzustand des Fahrzeugluftreifens beträgt, beträgt die Tiefe T_{F} der Feineinschnitte 6 in der Mitte der Umfangsrippe 3 7 mm. Im Endbereich der Feineinschnitte 6 ist die Tiefe T_{F} der Feineinschnitte 6 reduziert. In dem Ausführungsbeispiel ist die Tiefe T_{F} über 21 % der Länge L_{red} der Konturlinie 10 an beiden Endbereichen reduziert. In dem Ausführungsbeispiel ist die Tiefe T_{F} der Konturlinie über die Länge L_{red} von 5,5 mm entlang der Konturlinie 10 reduziert. Jeder zweite Feineinschnitt 6 weist in seinem Endbereich eine Tiefe T_{F,1} von nur 1,75 mm auf. Die Tiefe T_{F,2} der anderen Feineinschnitte ist in den Endbereichen über die gleiche Länge L_{red} auf 50 % der Profiltiefe T_{F} reduziert und beträgt daher 3,5 mm.

In der Umfangsrippe 3 werden die Feineinschnitte 6 in gewissen Abständen in Umfangsrichtung U durch eine dünne Querrille 8 ersetzt. In dem gezeigten Ausführungsbeispiel beträgt dieser Abstand in einer unregelmäßigen Abfolge abwechselnd das vier-, fünf- oder sechsfache der Länge des Abstands d der Feineinschnitte 6. Hierbei sind die dünnen Querrillen 8 in einem unregelmäßigen Abstand angeordnet, um Schwingungen der Umfangsrippe 3 aufgrund von Resonanzen zu vermeiden, die aus einem regelmäßigen Abstand der dünnen Querrillen 8 entstehen können. Die Breite B_{Q} der dünnen Querrillen 8 ist in dem Ausführungsbeispiel dreimal so groß, wie die Breite B_{F} der Feineinschnitte 6. Die Breite B_{F} der Feineinschnitte 6 beträgt in dem Ausführungsbeispiel 0,5 mm und entsprechend die Breite B_{Q} der dünnen Querrillen 8 1,5 mm. Die Profiltiefe T_{Q} der dünnen Querrillen beträgt 8 mm. Die Querrillen 8 laufen entlang der gleichen Konturlinie 10, wie die Feineinschnitte 6. Hierbei verlaufen die Feineinschnitte 8 lediglich entlang der Konturlinie 10 und weisen keine weitere Komponente senkrecht zur Konturlinie auf, wie beim wellenförmigen Verlauf der Feineinschnitte 6.

Zudem weisen die dünnen Querrillen 8 in ihren Endbereichen jeweils eine Schneetasche 20 auf. Hierbei ist der Endbereich der Konturlinie 10, die sich von einer Umfangsrille 2 bis zur anderen Umfangsrille 2' erstreckt, die die Umfangsrippe 3 begrenzen, der Bereich der Konturlinie 10, der jeweils an den Umfangsrillen 2 und 2' beginnt und dann sich nach innen in die Umfangsrippe 3 erstreckt. Dabei weisen die Schneetaschen 20 dann entlang der Konturlinie 10 eine Länge Ls auf. In dem Ausführungsbeispiel weisen die Schneetaschen 20 die gleiche Länge Ls auf, wie die Länge L_{red} der Anhebungen der Feineinschnitte 6. Entsprechend beträgt auch die Länge Ls der Schneetaschen 21 % der Länge der Konturlinie 10. Weiter weisen die Schneetaschen 20 auch eine Ausdehnung parallel zur Oberfläche des Laufstreifens 1 senkrecht zur Konturlinie 10 auf. Diese Breite B_{S} der Schneetaschen 20 ist im Ausführungsbeispiel doppelt so groß wie die Breite B_{Q} der dünnen Querrillen 8 und beträgt daher 3 mm. Zudem weisen die Schneetaschen 20 auch eine Tiefe T_{S} in radialer Richtung auf. Die Tiefe T_{S} der Schneetaschen 20 beträgt im Ausführungsbeispiel genau die Hälfte der Profiltiefe T_{Q} der dünnen Querrillen 8. Entsprechend hat die Profiltiefe T_{S} der Schneetaschen einen Wert von 4 mm. Insbesondere der Figur 3 können weitere Details der Ausgestaltung der Schneetaschen 20 entnommen werden. In der Tiefe T_{S} weisen die Schneetaschen 20 einen Bodenbereich 21 auf. Im gezeigten Ausführungsbeispiel ist dieser Bodenbereich 21 im Wesentlichen parallel zur Oberfläche des Laufstreifens 1. Weiter weisen die Schneetaschen 20 Seitenflächen 22 auf. Im gezeigten Ausführungsbeispiel verlaufen die Seitenflächen 22 zum einen parallel zur Konturlinie 10 und senkrecht zur Oberfläche des Laufstreifens 1, so dass die Oberflächen eine Komponente in radialer Richtung aufweisen. Zudem ist eine Seitenfläche 22 der Schneetaschen als Endfläche 23 ausgestaltet, die eine Fläche senkrecht zur Konturlinie 10 ist. Zwischen dem Bodenbereich 21 und den Seitenflächen 22, insbesondere der Endfläche 23, gibt es einen Übergang mit einem Krümmungsradius von 1 mm. Weiter weist der Bodenbereich 21 der Schneetaschen 20 in seiner Mitte einen Feineinschnitt 25 auf, der entlang der Konturlinie 10 der dünnen Querrillen 8 verläuft. Die Breite der Feineinschnitte 25 entspricht der Breite B_{F} der Feineinschnitte 6. Die Tiefe dieser Feineinschnitte 25 entspricht der Tiefe T_{F} der übrigen Feineinschnitte 6 der Umfangsrippe 3. Wie alle Ausführungsformen des erfindungsgemäßen Fahrzeugluftreifens zeichnet sich die zentrale Umfangsrippe 3 des Ausführungsbeispiels dadurch aus, dass sie durch die vorgesehenen Schneetaschen 20 eine gute Schnee-Schnee-Reibung aufweisen, die durch ein schnelles Verfüllen der Schneetaschen 20 nach kurzer Zeit zur Verfügung steht, sowie weiter durch eine gleichmäßige Verkippung der vorgesehenen Profilklotzelemente, wodurch ein guter Ausgleich zwischen Schneeverhalten (Schneeperformance) und Eisverhalten (Eisperformance) der Umfangsrippe 3 erreicht wird. Zudem ermöglicht die Ausgestaltung der Schneetaschen 20 weiter eine sehr gleichmäßige Elastizität bzw. Umfangsteifigkeit der Querrippe 3 in Achsrichtung A. Hier gleichen die vorgesehenen Schneetaschen 20 am Rand der Umfangsrippe 3 die Anhebungen am Ende der Feineinschnitte 6 der Umfangsrippe 3 weitgehend aus. Die Struktur einer mittigen Umfangsrippe des erfindungsgemäßen Fahrzeugluftreifens wurde anhand der beschriebenen Parameter dieser Beschreibung umfassend erläutert. Diese Struktur ist jeweils der Größe eines Fahrzeugluftreifens entsprechend anzupassen. Insbesondere werden die Umfangsrippen 3 der erfindungsgemäßen Fahrzeugluftreifen in Fahrzeugluftreifen verwendet, deren Breite zwischen 195 mm und 315 mm beträgt. Die Höhe des Reifens kann hierbei zwischen 35 % der Breite des Fahrzeugluftreifens und 65 % der Breite des Fahrzeugluftreifens betragen. Die Felgen, auf denen derartige Fahrzeugluftreifen montiert werden, können einen Durchmesser zwischen 15 Zoll und 22 Zoll aufweisen. Je nach entsprechendem Umfang eines solchen Reifens kann eine unterschiedliche Zahl von Feineinschnitten 6 und dünnen Querrillen 8 über den Umfang des Fahrzeugluftreifens vorgesehen sein. Hierbei kann Anzahl von Feineinschnitten 6 und den Querrillen 8 mit dem Umfang mitwachsen oder nur zu einem gewissen Anteil mit dem Umfang mitwachsen. Ein solcher Anteil kann z. B. zwischen 5 und 20 % liegen. Generell können erfindungsgemäße Fahrzeugluftreifen natürlich auch andere Dimensionen aufweisen, solange die vorteilhaften Eigenschaften der beschriebenen Umfangsrippe in dem Fahrzeugluftreifen genutzt werden können. Abschließend sei darauf hingewiesen, dass die Erfindung anhand vieler detaillierter Ausführungsbeispiele erläutert wurde. Diese sind trotz allem Beispiele der Erfindung. Entsprechend können andere Ausführungsformen des erfindungsgemäßen Fahrzeugluftreifens auch nur einzelne Merkmale eines Ausführungsbeispiels aufweisen oder gleichzeitig Merkmale verschiedener beschriebener Ausführungsbeispiele, soweit dies nicht explizit anders dargestellt wurde.

### Bezugszeichenliste

- 1: Laufstreifen
- 2, 2': Umfangsrille
- 3: Umfangsrippe
- 4, 4': Seite einer Umfangsrille
- 6: Feineinschnitt
- 8: dünne Querrille
- 10: Konturlinie
- 20: Schneetasche
- 21: Bodenbereich einer Schneetasche
- 22: Seitenfläche einer Schneetasche
- 23: Endfläche einer Schneetasche
- 25: Feineinschnitt unterhalb einer Schneetasche
- A: Achsrichtung
- B: Breite der Umfangsrippe in Achsrichtung A
- B_{F}: Breite eines Feineinschnitts
- B_{Q}: Breite der dünnen Querrille
- B_{S}: Breite der Schneetasche senkrecht zur Konturlinie
- d: Abstand der Feineinschnitte in Umfangsrichtung
- dₙ: Abstand benachbarter Feineinschnitte in Umfangsrichtung
- L_{red}: Länge der Konturlinie, über die die Tiefe eines Feineinschnitts reduziert ist
- L_{S}: Länge der Schneetasche entlang der Konturlinie
- T_{F}: Tiefe der Feineinschnitte
- T_{F,1}: reduzierte Tiefe eines ersten Feineinschnitts im Randbereich
- T_{F,2}: reduzierte Tiefe eines zweiten Feineinschnitts im Randbereich
- T_{Q}: Tiefe der dünnen Querrille
- T_{S}: Tiefe der Schneetasche
- U: Umfangsrichtung
- α: Winkel, um den die Konturlinie der Feineinschnitte im Endbereich der Feineinschnitte von der Achsrichtung A des Fahrzeugluftreifens abweicht
- β: eingeschlossener Winkel zweier zueinander angewinkelten Geraden, die eine Konturlinie bilden
- γ: Winkel, um den die zwei Seiten von zwei umlaufenden Umfangsrillen, die die Umfangsrippe begrenzen, in radialer Richtung von einer senkrechten Ebene zur Achsrichtung A abweichen

## Patentansprüche

1. Fahrzeugluftreifen mit einem ein Profil aufweisenden Laufstreifen (1), der eine mittige Umfangsrippe (3) aufweist, die durch zwei mindestens nahezu zueinander parallel laufende Seiten (4, 4') von zwei um den gesamten Fahrzeugluftreifen umlaufenden Umfangsrillen (2, 2') begrenzt wird, die mindestens nahezu senkrecht zur Achsrichtung A des Fahrzeugluftreifens verlaufen, indem sie lediglich von der radialer Richtung einer senkrechten Ebene zur Achsrichtung A um einen Winkel y, der kleiner als 15 ° ist, so abweichen, dass hierdurch die Breite der Umfangsrippe (3) mit zunehmender Profiltiefe konstant bleibt oder zunimmt, wobei die Umfangsrippe (3) in einen regelmäßigem Abstand d in Umfangsrichtung einen Feinschnitt (6) aufweist, der von einer zur anderen der zueinander parallel laufende Seiten (4, 4') der zwei umlaufenden Umfangsrillen (2, 2') entlang einer Konturlinie (10) verläuft, und wobei anstelle eines Feineinschnitts (6) in der drei- bis siebenfachen Länge des Abstands d der Feinschnitte (6) in Umfangsrichtung jeweils eine dünne Querrille (8) in der mittigen Umfangsrippe (3) angeordnet ist, deren Breite B_{Q} mindestens 2,5 mal so groß ist wie die Breite B_{F} eines Feineinschnitts (6) und die die Konturlinie (10) der Feineinschnitte (6) aufweist,
**dadurch gekennzeichnet, dass**
die Tiefe T_{F} der Feineinschnitte (6) mindestens teilweise über eine Länge L_{red} der Konturlinie (10) in den Endbereichen der Feineinschnitte (6) reduziert ist und über 80 % bis 250 % dieser Länge L_{red} der Konturlinie (10) die dünnen Querrillen (8) in ihren Endbereichen eine Schneetasche (20) aufweisen, die eine Breite Bₛ senkrecht zur Konturlinie (10) aufweist, die mindestens 1,5 mal so groß ist wie die Breite B_{Q} der dünnen Querrille (8), und eine Tiefe T_{S}, die maximal 65 % der Profiltiefe T_{Q} der dünnen Querrille (8) beträgt.

2. Fahrzeugluftreifen gemäß Patentanspruch 1, **dadurch gekennzeichnet, dass** die mittige Umfangsrippe (3) die zentrale Umfangsrippe (3) des Fahrzeugluftreifens ist.

3. Fahrzeugluftreifen gemäß Patentanspruch 1 oder 2, **dadurch gekennzeichnet, dass** die dünnen Querrillen (8) anstelle eines Feineinschnitts (6) über verschiedene Vielfache des Abstands d der Feinschnitte (6) in Umfangsrichtung in der mittigen Umfangsrille (3) in der Umfangsrichtung angeordnet sind.

4. Fahrzeugluftreifen gemäß mindestens einem der Patentansprüche 1 bis 3, **dadurch gekennzeichnet, dass** die Schneetaschen (20) symmetrisch zur Konturlinie (10) der dünnen Querrillen (8) angeordnet sind.

5. Fahrzeugluftreifen gemäß mindestens einem der Patentansprüche 1 bis 4, **dadurch gekennzeichnet, dass** die Schneetaschen (20) eine Breite B_{S} senkrecht zur Konturlinie (10) aufweisen, die 2 bis 3 mal so groß ist wie die Breite B_{Q} der dünnen Querrille (8) und bevorzugt 2,2 bis 2,5 mal so groß ist wie die Breite B_{Q} der dünnen Querrille (8).

6. Fahrzeugluftreifen gemäß mindestens einem der Patentansprüche 1 bis 5, **dadurch gekennzeichnet, dass** die Schneetaschen (20) eine Tiefe Ts aufweisen, die 35 bis 60 % der Profiltiefe T_{Q} der dünnen Querrille (8) beträgt, bevorzugt 40 % bis 58 % der Profiltiefe T_{Q} der dünnen Querrille (8) beträgt und besonders bevorzugt 50 % bis 55 % der Profiltiefe T_{Q} der dünnen Querrille (8) beträgt.

7. Fahrzeugluftreifen gemäß mindestens einem der Patentansprüche 1 bis 6, **dadurch gekennzeichnet, dass** die Schneetaschen (20) einen Bodenbereich (21) aufweisen, der sich in radialer Richtung nach innen mit einem Feinschnitt (25) entlang der Konturlinie (10) fortsetzt.

8. Fahrzeugluftreifen gemäß Patentanspruch 7, **dadurch gekennzeichnet, dass** die Feinschnitte (25) im Bodenbereich (21) der Schneetaschen (20) die gleiche Tiefe T_{F} aufweisen wie die Feineinschnitte (6) der Umfangsrippe (3), die nicht durch eine dünne Querrille (8) ersetzt wurden, in der Mitte der Umfangsrippe (3).

9. Fahrzeugluftreifen gemäß mindestens einem der Patentansprüche 1 bis 8, **dadurch gekennzeichnet, dass** die der Konturlinie (10) entlanglaufenden Feineinschnitte (6) über einen Teil der Konturlinie (10) wellenförmig ausgeprägt sind.

10. Fahrzeugluftreifen gemäß mindestens einem der Patentansprüche 1 bis 9, **dadurch gekennzeichnet, dass** die Tiefe T_{F} der Feineinschnitte (6) teilweise jeweils über eine Länge L_{red} der Konturlinie (10) von 7 % bis 35 % in einem Endbereich oder beiden Endbereichen der Feineinschnitte (6) reduziert ist, bevorzugt über eine Länge L_{red} der Konturlinie (10) von 12 % bis 30 % und besonders bevorzugt über eine Länge L_{red} der Konturlinie (10) von 16 % bis 23 %.

## Claims

1. Pneumatic vehicle tyre with a tread (1) which has a profile and a middle circumferential rib (3) delimited by two sides (4, 4'), running at least approximately parallel to one another, of two circumferential channels (2, 2') which surround the entire pneumatic vehicle tyre and run at least approximately perpendicular to the axial direction A of the pneumatic vehicle tyre in that they only deviate by an angle γ of less than 15° from the radial direction of a plane perpendicular to the axial direction A, such that the width of the circumferential rib (3) thus remains constant or increases with increasing profile depth, wherein the circumferential rib (3) has, at a regular spacing d in the circumferential direction, a sipe (6) which runs from one to the other of the mutually parallel sides (4, 4') of the two surrounding circumferential channels (2, 2') along a contour line (10), and wherein, at three to seven times the length of the spacing d of the sipes (6) in the circumferential direction, arranged in the middle circumferential rib (3) instead of a sipe (6) there is in each case a thin transverse channel (8), the width B_{Q} of which is at least 2.5 times the width B_{F} of a sipe (6) and which has the contour line (10) of the sipes (6), **characterized in that**
the depth T_{F} of the sipes (6) is at least partially reduced over a length L_{red} of the contour line (10) in the end regions of the sipes (6) and, over 80% to 250% of this length L_{red} of the contour line (10), the thin transverse channels (8) have in their end regions a snow pocket (20) which has a width Bs perpendicular to the contour line (10) of at least 1.5 times the width B_{Q} of the thin transverse channel (8) and a depth Ts of at most 65% of the profile depth T_{Q} of the thin transverse channel (8).

2. Pneumatic vehicle tyre according to Patent Claim 1, **characterized in that** the middle circumferential rib (3) is the central circumferential rib (3) of the pneumatic vehicle tyre.

3. Pneumatic vehicle tyre according to Patent Claim 1 or 2, **characterized in that** the thin transverse channels (8) are arranged in the middle circumferential rib (3) in the circumferential direction instead of a sipe (6) over various multiples of the spacing d of the sipes (6) in the circumferential direction.

4. Pneumatic vehicle tyre according to at least one of Patent Claims 1 to 3, **characterized in that** the snow pockets (20) are arranged symmetrically with respect to the contour line (10) of the thin transverse channels (8).

5. Pneumatic vehicle tyre according to at least one of Patent Claims 1 to 4, **characterized in that** the snow pockets (20) have a width Bs perpendicular to the contour line (10) of 2 to 3 times the width B_{Q} of the thin transverse channel (8) and preferably of 2.2 to 2.5 times the width B_{Q} of the thin transverse channel (8).

6. Pneumatic vehicle tyre according to at least one of Patent Claims 1 to 5, **characterized in that** the snow pockets (20) have a depth Ts of 35 to 60% of the profile depth T_{Q} of the thin transverse channel (8), preferably 40% to 58% of the profile depth T_{Q} of the thin transverse channel (8), and particularly preferably 50% to 55% of the profile depth T_{Q} of the thin transverse channel (8).

7. Pneumatic vehicle tyre according to at least one of Patent Claims 1 to 6, **characterized in that** the snow pockets (20) have a bottom region (21) that continues inwards in a radial direction with a sipe (25) along the contour line (10).

8. Pneumatic vehicle tyre according to Patent Claim 7, **characterized in that** the sipes (25) in the bottom region (21) of the snow pockets (20) have the same depth T_{F} as those sipes (6) of the circumferential rib (3) which have not been replaced by a thin transverse channel (8) have in the middle of the circumferential rib (3).

9. Pneumatic vehicle tyre according to at least one of Patent Claims 1 to 8, **characterized in that** the sipes (6) running along the contour line (10) are of an undulating form over a part of the contour line (10).

10. Pneumatic vehicle tyre according to at least one of Patent Claims 1 to 9, **characterized in that** the depth T_{F} of the sipes (6) is partially reduced in each case over a length L_{red} of the contour line (10) of 7% to 35% in one end region or both end regions of the sipes (6), preferably over a length L_{red} of the contour line (10) of 12% to 30%, and particularly preferably over a length L_{red} of the contour line (10) of 16% to 23%.

## Revendications

1. Pneumatique de véhicule avec une bande de roulement (1) présentant un profil, qui présente une nervure périphérique médiane (3), qui est délimitée par deux côtés (4, 4') au moins presque parallèles l'un à l'autre de deux rainures périphériques (2, 2') faisant le tour de l'ensemble du pneumatique de véhicule, qui s'étendent au moins presque perpendiculairement à la direction axiale A du pneumatique de véhicule, en s'écartant uniquement de la direction radiale d'un plan perpendiculaire à la direction axiale A d'un angle γ qui est inférieur à 15°, de telle sorte que, de ce fait, la largeur de la nervure périphérique (3) reste constante ou augmente lorsque la profondeur de profil augmente, la nervure périphérique (3) présentant, à une distance régulière d dans la direction périphérique, une fine découpe (6) qui s'étend d'un côté à l'autre des côtés parallèles l'un à l'autre (4, 4') des deux rainures périphériques (2, 2') faisant le tour le long d'une ligne de contour (10), et, au lieu d'une fine entaille (6), une mince rainure transversale (8) étant agencée dans la nervure périphérique médiane (3), sur une longueur de trois à sept fois la distance d entre les fines découpes (6) dans la direction périphérique, dont la largeur B_{Q} est au moins 2,5 fois supérieure à la largeur B_{F} d'une fine entaille (6) et qui présente la ligne de contour (10) des fines entailles (6),
**caractérisé en ce que**
la profondeur T_{F} des fines entailles (6) est réduite au moins partiellement sur une longueur L_{red} de la ligne de contour (10) dans les zones d'extrémité des fines entailles (6) et sur 80 % à 250 % de cette longueur L_{red} de la ligne de contour (10), les minces rainures transversales (8) présentent une poche à neige (20) dans leurs zones d'extrémité, qui présente une largeur Bs perpendiculaire à la ligne de contour (10) qui est au moins 1,5 fois plus grande que la largeur B_{Q} de la mince rainure transversale (8), et une profondeur Ts qui représente au maximum 65 % de la profondeur de profil T_{Q} de la mince rainure transversale (8).

2. Pneumatique de véhicule selon la revendication 1, **caractérisé en ce que** la nervure périphérique médiane (3) est la nervure périphérique centrale (3) du pneumatique de véhicule.

3. Pneumatique de véhicule selon la revendication 1 ou 2, **caractérisé en ce que** les minces rainures transversales (8) sont agencées dans la nervure périphérique médiane (3) dans la direction périphérique sur différents multiples de la distance d entre les fines découpes (6) au lieu d'une fine entaille (6).

4. Pneumatique de véhicule selon au moins l'une quelconque des revendications 1 à 3, **caractérisé en ce que** les poches à neige (20) sont agencées symétriquement par rapport à la ligne de contour (10) des minces rainures transversales (8).

5. Pneumatique de véhicule selon au moins l'une quelconque des revendications 1 à 4, **caractérisé en ce que** les poches à neige (20) présentent une largeur Bs perpendiculaire à la ligne de contour (10) qui est 2 à 3 fois plus grande que la largeur B_{Q} de la mince rainure transversale (8) et de préférence 2,2 à 2,5 fois plus grande que la largeur B_{Q} de la mince rainure transversale (8).

6. Pneumatique de véhicule selon au moins l'une quelconque des revendications 1 à 5, **caractérisé en ce que** les poches à neige (20) présentent une profondeur Ts qui représente 35 à 60 % de la profondeur de profil T_{Q} de la mince rainure transversale (8), de préférence 40 % à 58 % de la profondeur de profil T_{Q} de la mince rainure transversale (8) et de manière particulièrement préférée 50 % à 55 % de la profondeur de profil T_{Q} de la mince rainure transversale (8).

7. Pneumatique de véhicule selon au moins l'une quelconque des revendications 1 à 6, **caractérisé en ce que** les poches à neige (20) présentent une zone de fond (21) qui se prolonge dans la direction radiale vers l'intérieur par une fine découpe (25) le long de la ligne de contour (10).

8. Pneumatique de véhicule selon la revendication 7, **caractérisé en ce que** les fines découpes (25) dans la zone de fond (21) des poches à neige (20) présentent la même profondeur T_{F} que les fines entailles (6) de la nervure périphérique (3) qui n'ont pas été remplacées par une mince rainure transversale (8), au milieu de la nervure périphérique (3).

9. Pneumatique de véhicule selon au moins l'une quelconque des revendications 1 à 8, **caractérisé en ce que** les fines entailles (6) qui s'étendent le long de la ligne de contour (10) sont marquées sous forme ondulée sur une partie de la ligne de contour (10).

10. Pneumatique de véhicule selon au moins l'une quelconque des revendications 1 à 9, **caractérisé en ce que** la profondeur T_{F} des fines entailles (6) est partiellement réduite respectivement sur une longueur L_{red} de la ligne de contour (10) de 7 % à 35 % dans une zone d'extrémité ou dans les deux zones d'extrémité des fines entailles (6), de préférence sur une longueur L_{red} de la ligne de contour (10) de 12 % à 30 % et de manière particulièrement préférée sur une longueur L_{red} de la ligne de contour (10) de 16 % à 23 %.
